**Europäisches Patentamt**

**European Patent Office**

**Office européen des brevets**

(19)

(11) Veröffentlichungsnummer: **0 491 321 A1**

(12) **EUROPÄISCHE PATENTANMELDUNG**

(21) Anmeldenummer: **91121521.8**

(22) Anmeldetag: **16.12.91**

(51) Int. Cl.5: **G06K 13/05**, G06K 13/06, G06K 13/08

(30) Priorität: **17.12.90 DE 4040082**

(43) Veröffentlichungstag der Anmeldung:
**24.06.92 Patentblatt 92/26**

(84) Benannte Vertragsstaaten:
**AT BE CH DE DK ES FR GB IT LI NL SE**

(71) Anmelder: **Rinas, Wilfried**
**Wiesenstrasse 7**
**W-7796 Aftholderberg(DE)**

(72) Erfinder: **Rinas, Wilfried**
**Wiesenstrasse 7**
**W-7796 Aftholderberg(DE)**

(74) Vertreter: **Weiss, Peter H., Dr. rer. nat.**
**Patentanwalt Dr. Peter H. Weiss Postfach 12**
**50 Zeppelinstrasse 4**
**W-7707 Engen(DE)**

(54) **Vorrichtung zum Lesen und/oder Schreiben von Markierungen, Informationen od. dgl. auf Karten.**

(57) Bei einer Vorrichtung zum Schreiben und/oder Lesen von Markierungen, Informationen od. dgl. auf Karten (1), insbesondere Magnet- und Chipkarten, ist ein Schlitz (18) zum Einführen der Karte (1), ein Schreib-/Lesekopf (13) zum Erfassen und-/oder Übertragen von Informationen von bzw. auf der/die Karte (1) sowie eine Einrichtung zum Einziehen und Ausstoßen der Karte vorgegehen. Dabei soll in Einschubrichtung der Karte (1) in den Bereich des Schlitzes (8) eine zumindest teilkreisförmige Wippe (39) eingreifen, welche um eine Welle, Wellenstifte (40) od. dgl. dreht und mit der exzentrisch zu der Welle bzw. den Wellenstiften (40) ein Kraftspeicher (41) verbunden ist. Dieser Kraftspeicher (41) ist abhängig von der Drehrichtung (z) der Wippe (39) nach Überschreiten eines Scheitelpunktes und unterstützt die Drehbewegung der Wippe (39) in die eine Drehrichtung (z) oder gegen diese Drehrichtung (z).

Fig. 3

Die Erfindung betrifft eine Vorrichtung zum Lesen und/oder Schreiben von Markierungen, Informationen od. dgl. auf Karten, insbesondere Magnet- und Chipkarten, mit einem Schlitz zum Einführen der Karte, einem Schreib-/Lesekopf zum Erfassung und/oder Übertragen von Informationen von bzw. auf die Karte sowie einer Einrichtung zum Einziehen und Ausstoßen der Karte.

Derartige Schreib-/Lesegeräte finden heute in vielen Geschäftsbereichen Anwendung. Beispielsweise dienen sie zum Lesen von Magnetkarten, Bankomat-Karten oder auch zum Öffnen von Türen zu Sicherheitszonen. Sie können bei Zeiterfassungsgeräten oder bei Paß- und Zollkontrollen vorgesehen sein.

In neuerer Zeit werden diese Karten anstelle oder zusätzlich zu Magnetstreifen auch mit Chips ausgerüstet, welche entsprechende Informationen enthalten. Derartige Karten finden sich beispielsweise in Autotelefonen, wobei die Karten auch für Münzfernsprecher geeignet sind.

Die Markierung bzw. der Chip enthält meist Angaben über die Person des Karteninhabers oder ähnliche Informationen. Diese Angaben müssen auf die Karte so aufgeschrieben werden, daß sie wieder ausgelesen werden können. Sie dienen dann beispielsweise zum Beweis einer Legitimation des Karteninhabers für einen gewissen Vorgang.

Bezüglich ihrer Handhabung gibt es zwei grundsätzlich unterschiedliche Ausführungsformen von Schreib-/Lesegeräten. Bei der einen Ausführungsform wird die Karte in den Einführschlitz gesteckt, jedoch beim Lesen vom Karteninhaber festgehalten und nach dem Lesen wieder entnommen. Dies hat den Nachteil, daß in vielen Fällen der Bediener zu unruhig ist und entweder mit der Karte im Schlitz spielt oder diese zu früh aus dem Schlitz herauszieht. Hierdurch entstehen Lesefehler.

Bei der zweiten Ausführungsform ist vorgesehen, daß die Karte ebenfalls in den Einführschlitz eingesteckt, sodann aber automatisch eingezogen wird. Ein entsprechendes Schreib-/Lesegerät ist beispielsweise in der DE-OS 36 41 298 gezeigt. Dieses Gerät ist von hervorragender Qualität und wird vor allem dann angewendet, wenn in dem Gerät außer dem Einziehen noch weitere Funktionen durchgeführt werden sollen, wie beispielsweise die Überprüfung der Karte auf Echtheit od. dgl..

Bei diesem Gerät wird beispielsweise eine gefälschte Karte oder Hilfskarte im Gerät einbehalten. Deshalb ist der Aufbau relativ kompliziert und dieses Gerät vor allem für hochwertigere Funktionen gedacht.

Der Erfinder hat sich zum Ziel gesetzt, ein Gerät der oben genannten Art zu entwickeln, welches das Einziehen und Ausstoßen der Karte mit wesentlich einfacheren Hilfsmitteln vor allem auf mechanischem Weg vollzieht. Hierdurch soll das Gerät dann auch für einfachere Funktionen bzw. zum Bedienen von einfacheren Vorrichtungen, wie Zigaretten- oder Getränkeautomaten, geeignet sein.

Zur Lösung dieser Aufgabe führt, daß in Einschubrichtung der Karte in den Bereich des Schlitzes eine zumindest teilkreisförmige Wippe eingreift, welche um eine Welle, Wellenstifte, Drehachse od. dgl. dreht und mit der exzentrisch zu der Welle bzw. den Wellenstiften ein Kraftspeicher verbunden ist, welcher abhängig von der Drehrichtung der Wippe nach Überschreiten eines Scheitelpunktes die Drehbewegung der Wippe in die eine Drehrichtung oder gegen diese Drehrichtung unterstützt.

Der wesentliche Grundgedanke der vorliegenden Erfindung besteht darin, daß das Einziehen und Ausstoßen zwar automatisch, jedoch auf mechanischem Wege erfolgt. Hierdurch kann die Herstellung des gesamten Gerätes wesentlich vereinfacht werden, was sich wiederum vorteilhaft auf die Kosten auswirkt.

Im wesentlichen macht sich die vorliegende Erfindung die Kraft eines Kraftspeichers und dessen exzentrische Befestigung an der Wippe zunutze. Da die Wippe zumindest teilkreisförmig ausgebildet ist und der Kraftspeicher exzentrisch zu der Welle gehaltert ist, um welche die Wippe dreht, erfolgt bei einer Drehung der Wippe um die Welle ein Spannen des Kraftspeichers bis zu einem gewissen Scheitelpunkt, nach dessen Überschreitung der Kraftspeicher die Drehung der Wippe unterstützt. Wird somit eine Karte in den Schlitz des vorliegenden Schreib-/Lesegerätes eingeführt, so trifft diese Karte nach einem gewissen Weg auf den Umfang der Wippe. Bevorzugt ist dieser Umfang der Wippe nun mit einem reibschlüssigen Material belegt, so daß bei einem weiteren Einschieben der Karte die Wippe mitgenommen wird. Hierbei dreht sie um ihre Welle bzw. die oben genannten Wellenstifte. Dies geschieht gegen den Zug des Kraftspeichers und zwar bis zu dem Scheitelpunkt, nach dessen Überschreitung der Zug des Kraftspeichers die Drehung der Wippe unterstützt. Hierdurch wird die Karte aus den Fingern des Benutzers gezogen und automatisch in den Schlitz eingeführt.

Der Einfachheit halber wird als Kraftspeicher eine Feder verwendet. Hier sollen jedoch auch andere Möglichkeiten denkbar sein.

Die Halterung der Wippe selbst erfolgt bevorzugt an einem einfachen U-förmigen Gehäuserahmen. Dabei sitzt die Wippe zwischen zwei Seitenschenkeln dieses Gehäuserahmens und bildet mit diesen durch die Wellenstifte ein Drehlager. Es wird keine durchgängige Welle bevorzugt, da der Kraftspeicher, zumal wenn er als Feder ausgebildet ist, bei der Drehung der Wippe zwischen den beiden Wellenstiften hindurchgleiten soll. Hierdurch wird die ganze Einheit wesentlich kompakter gebaut. Zu diesem Zweck besitzt auch die Wippe in sich einen schlitzförmigen Freiraum, in dem die Feder sitzt. Innerhalb dieses Freiraumes ist die Feder mittels eines Querstiftes mit der Wippe verbunden, wobei eben dieser Querstift exzentrisch zu den Wellenstiften angeordnet ist. Jenseits dieses Querstiftes führt die Feder aus dem Freiraum der Wippe heraus und ist andernends über einen Querbolzen gelegt, der wiederum einem schulterförmigen Absatz des Gehäuserahmens aufliegt. Dies ist eine sehr einfache und wirkungsvolle Anordnung, weshalb sie bevorzugt wird. Allerdings sind sicherlich auch andere Lagerungen der Wippe denkbar und sollen vom Erfindungsgedanken umfaßt sein.

Damit die Karte nicht der Wippe ausweichen kann, wirkt die Wippe mit einer Druckrolle zusammen, welche von der anderen Seite in den Bereich des Schlitzes eingreift. Auch diese Druckrolle lagert an einer entsprechenden Welle, wobei bevorzugt diese Welle einen gewissen Bewegungsspielraum hat, damit die Druckrolle beim Einschieben der Karte auf die Karte aufgleiten kann.

Dieser Bewegungsspielraum wird durch eine Blattfeder gewährleistet, welche auf die Welle drückt und diese in einer rillenförmigen Halterung hält.

Auch das Ausstoßen der Karte soll auf einfachem mechanischem Weg erfolgen. Hierzu ist ein Hebel vorgesehen, welcher am Ende eines Schreib-/Lesevorganges od. dgl. die Wippe angreift und diese in entgegengesetzte Drehrichtung versetzt. Dabei gibt die Wippe dem Druck des Hebels nach, wobei der Hebel den Zug des oben genannten Kraftspeichers überwindet. Infolge des reibschlüssigen Belages der Wippe wird bei ihrer Drehung die Karte mitgenommen und aus dem Schlitz ausgestoßen. Die Drehung mittels des Hebels geschieht solange, bis der oben genannte Scheitelpunkt für den Kraftspeicher erreicht ist. Wird als Kraftspeicher eine Feder benutzt, so liegen in diesem Augenblick die Wellenstifte für die Wippe sowie der Querstift und der Querbolzen für die Halterung der Feder in etwa auf einer Linie. Dies ist sozusagen ein Todpunkt. In diesem Augenblick greift auch der Hebel über eine Steuerkante der Wippe in den oben genannten Freiraum ein und drückt so auf die Steuerkante, daß die Wippe in dieser Stellung verharrt. Nunmehr kann der Benutzer die Karte herausziehen, ohne daß sie ihm entgegenspringt. Beim Herausziehen wird allerdings die Wippe durch die Karte ein Stückchen weitergedreht, so daß der Todpunkt überwunden ist und nunmehr der Zug des Kraftspeichers wieder wirksam wird. Hierdurch gelangt dann die Wippe in ihre Ausgangslage zur Aufnahme einer nächsten Karte.

Bevorzugt liegt der Hebel an einer Führungsschiene fest, welche gedreht werden kann. Auf dieser Führungsschiene sitzt auch ein Schlitten auf, der entlang der Führungsschiene gleitet und mit der Bewegung des Schreib-/Lesekopfes gekoppelt ist. Aus diesem Grunde wird gewährleistet, daß das Ausstoßen der Karten erst dann erfolgt, wenn der Schreib-/Lesekopf in seiner Endlage ist.

In dieser Endlage betätigt der Schlitter über einen Anschlag einen Winkelhebel, der wiederum über ein Hebelgestänge mit einem Ring auf der Führungsschiene so verbunden ist, daß die Führungsschiene bei einer Drehung des Winkelhebels um einen entsprechenden ortsfesten Drehbolzen ebenfalls in eine Drehbewegung versetzt wird. Diese Mechanik ist sehr einfach und wirkungsvoll und wird deshalb bevorzugt eingesetzt. Jedoch sind auch andere Möglichkeiten der Drehung der Führungsschiene bzw. der Bewegung des Hebels möglich und sollen vom Erfindungsgedanken umfaßt sein.

In einer anderen Ausführungsform dieser Ausstoßeinrichtung besitzt die Wippe eine Drehachse, welche über einen entsprechenden Antrieb und Getriebeelemente in Drehrichtung zum Ausstoßen einer Karte versetzt werden kann. Der Einfachheit halber besteht der Antrieb ebenfalls, wie oben ausgeführt, aus einem Schlitten, der entlang einer Führungsstange gleitet. Selbstverständlich kann dieser Schlitten auch der Schlitten sein, welcher den Schreib-/Lesekopf trägt. An dem Schlitten befindet sich ein Bolzen, der nahe einer Endlage des Schlittens auf eine Stirnfläche eines Kegelradsegmentes auftrifft und dieses um dessen Drehachse dreht. Dabei wird eine Zahnung des Kegelradsegmentes von einem Kegelrad abgelaufen, das wiederum mit der o.g. Drehachse verbunden ist. Dies ist eine sehr einfache und wirkungsvolle Möglichkeit, wobei die Kräfteaufteilung verbessert ist, da auf eine mögliche Elastizität des beim ersten Ausführungsbeispiel genannten Hebels keinen Wert gelegt werden muß.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Figur 1    eine Vorderansicht einer erfindungsgemäßen Vorrichtung zum Lesen und/oder Schreiben von Markierungen auf Karten;

Figur 2    eine Rückansicht der erfindungsgemäßen Vorrichtung gemäß Figur 1;

Figur 3    einen Querschnitt durch die Vorrichtung gemäß Figur 1 entlang Linie III-III in einer Gebrauchslage;

Figur 4    der Querschnitt gemäß Figur 3 durch die erfindungsgemäße Vorrichtung gemäß Figur 1 in einer anderen Gebrauchslage;

Figur 5    eine Rückansicht eines weiteren Ausführungsbeispiels einer erfindungsgemäßen Vorrichtung zum Lesen und/oder Schreiben von Markierungen auf Karten entsprechend Figur 2.

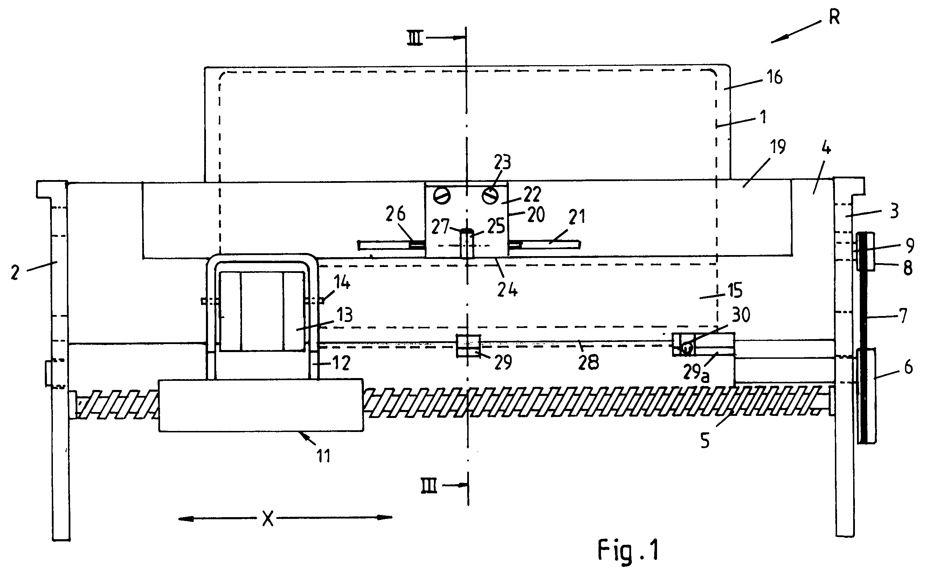

Eine erfindungsgemäße Vorrichtung R zum Lesen und/oder Schreiben von Markierungen auf Karten, insbesondere auf einer nur gestrichelt dargestellten Magnetkarte 1, weist gemäß Figur 1 zwei seitliche Halterahmen 2 und 3 auf. Beide Halterahmen 2 und 3 sind über einen Traversenstreifen 4 miteinander verbunden. Ferner ist beidseits in den Halterahmen 2 und 3 eine Spindel 5 gelagert, welche auf der einen Seite den Halterahmen 3 durchgreift, wobei ihr andererseits des Halterahmens 3 ein Antriebsrad 6 aufgesetzt ist.

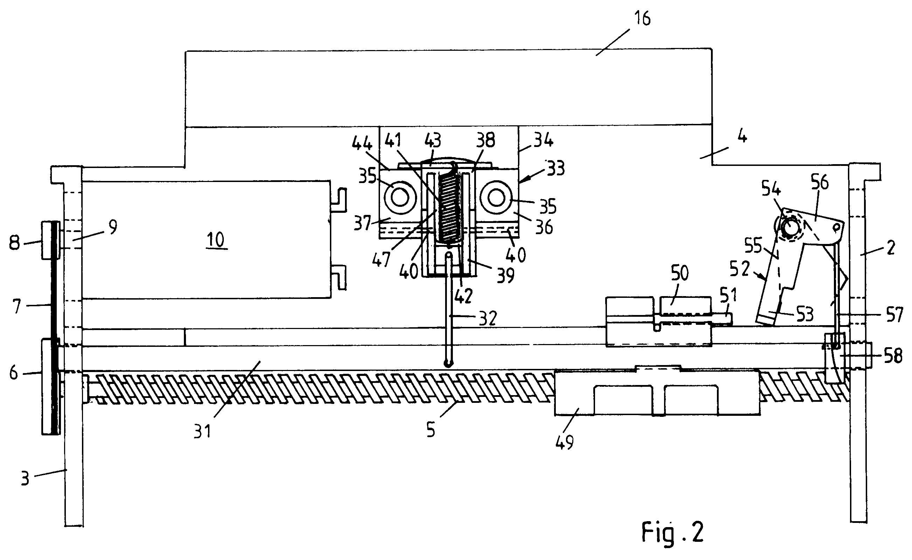

Dieses Antriebsrad 6 steht über einen Antriebsriemen 7 mit einem weiteren Rad 8 in Verbindung, welches auf einer Antriebswelle 9 aufgesetzt ist. Diese Antriebswelle 9 wird von einem in Figur 2 gezeigten Antrieb 10, welcher bevorzugt ein kleiner Elektromotor ist, in Drehbewegung versetzt. Die Drehbewegung wird über das Rad 8 und den Antriebsriemen 7 sowie das Antriebsrad 6 auf die Spindel 5 übertragen, so daß ein Schlitten 11 in eine Linearbewegung entlang der Spindel 5 in Richtung x versetzt wird. Hierzu durchsetzt die Spindel 5 den Schlitten 11 und wirkt in dem Schlitten 11 mit entsprechenden, nicht näher dargestellten Gewindegängen od. dgl. zusammen.

Auf dem Schlitten 11 sitzt ein Tragrahmen 12 auf, in welchem ein Schreib-/Lesekopf 13 an einer Drehwelle 14 gelagert ist. Dieser Schreib-/Lesekopf 13 wird mittels des Schlittens 11 bei Drehung der Spindel 5 entlang der Karte 1 geführt und zwar entlang dem gestrichelt angedeuteten Bereich 15, in welchem sich entsprechende Informationen befinden, die von dem Schreib-/Lesekopf 13 ausgelesen werden. Im anderen Fall werden über den Schreib-/Lesekopf 13 Informationen in den Bereich 15 übertragen.

Sollte es sich bei der Karte 1 nicht um eine Magnetkarte, sondern beispielsweise um eine Chipkarte handeln, so ist der Schreib-/Lesekopf entsprechend ausgebildet, um Informationen aus dem Chip der Karte zu entnehmen bzw. in den Chip der Karte einzugeben. Hier soll dem erfinderischen Gedanken keine Grenze gesetzt sein.

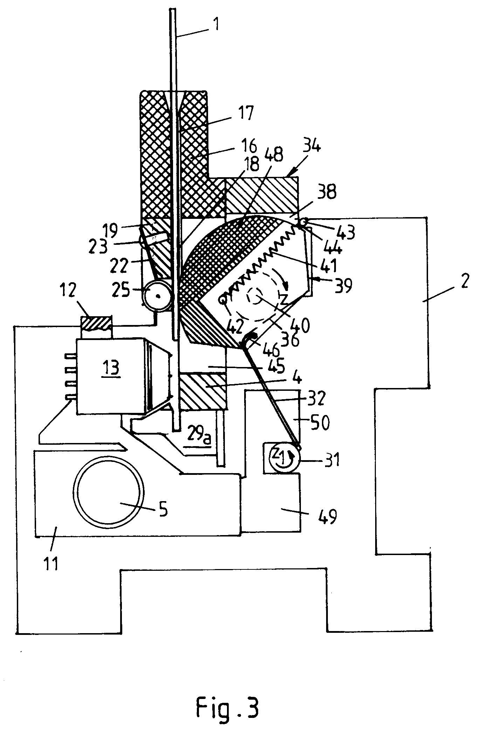

Die Karte 1 wird im übrigen zum Auslesen bzw. Beschreiben in eine Kartenführung 16 eingeschoben, wie sie in Figur 3 besser erkenntlich ist. Diese Kartenführung 16 besitzt einen Längsschlitz 17 zur Aufnahme der Karte 1. Ferner durchgreift die Karte 1 einen weiteren an den Längsschlitz 17 anschließenden Schlitz 18, welcher von dem Traversenstreifen 4 und einer Leiste 19 gebildet ist. Dabei ist es möglich, daß die Kartenführung 16, Traversenstreifen 4 und Leiste 19 aus unterschiedlichen Materialien hergestellt sind. Bevorzugt können sie jedoch auch jeweils einstückig hergestellt sein, wobei die Leiste 19 mit dem darüberliegenden Teil der Kartenführung 16 und der Traversenstreifen 4 mit dem anderen Teil der Kartenführung 16 eine Einheit bilden.

Etwa mittig ist der Leiste 19 eine etwa quadratische Ausnehmung 20 sowie eine beidseits daran anschließende Rille 21 eingeformt. In der Ausnehmung 20 sitzt eine Blattfeder 22, wobei diese über Schrauben 23 an der Leiste 19 in der Ausnehmung 20 befestigt ist. Diese Blattfeder 22 drückt mit ihren freien Kante 24 bzw. nahe der freien Kante 24 auf eine kurze Welle 26, welche in der Rille 21 sitzt. An dieser Welle ist eine Druckrolle 25 drehbar gelagert, wobei diese Druckrolle 25 ein Fenster 27 in der Blattfeder 22 durchgreift. Die Funktion dieser Druckrolle 25 wird weiter unten näher beschrieben.

Ferner sind am unteren Rand 28 des Traversenstreifens 4 Endanschläge 29 für die Karte 1 vorgesehen. In dem Endanschlag 29a ist zudem noch ein Sensor 30 angedeutet, welcher einer nicht näher gezeigten Elektronik meldet, sobald sich die Karte 1 in ihrer Endlage befindet. Erst dann wird beispielsweise ein entsprechender Lese- oder Schreibvorgang gestartet.

Gemäß Figur 2 ist andererseits des Traversenstreifens 4 zwischen dem Halterahmen 3 und dem Halterahmen 2 eine Führungsschiene 31 vorgesehen. An dieser Führungsschiene 31 liegt ein Hebel 32 fest, welcher eine Einrichtung 33 zum Einziehen der Karte 1 betätigt. Diese Einrichtung 33 zum Einziehen einer Karte 1 weist einen U-förmigen Gehäuserahmen 34 auf, welcher über zwei Schrauben 35 an dem Traversenstreifen 4 festgelegt ist. Zwei Seitenschenkel 36 und 37 werden durch eine Ausnehmung 38 voneinander getrennt. In dieser Ausnehmung 38 lagert eine Wippe 39, wobei entsprechende Wellenstifte 40 von den Seitenschenkeln 36 bzw. 37 in die Wippe 39 seitlich eingreifen. Um diese Wellenstifte 40 kann die Wippe 39 drehen. Die Drehung in die eine oder andere Richtung wird dabei von einer Feder 41 unterstützt, welche einerseits an einem Querstift 42 mit der Wippe 39 verbunden ist, während ihr anderes Ende einen Querbolzen 43 umgreift. Dieser Querbolzen 43 ruht auf einem schulterförmigen Absatz 44, welcher in den Gehäuserahmen 34 eingeformt ist.

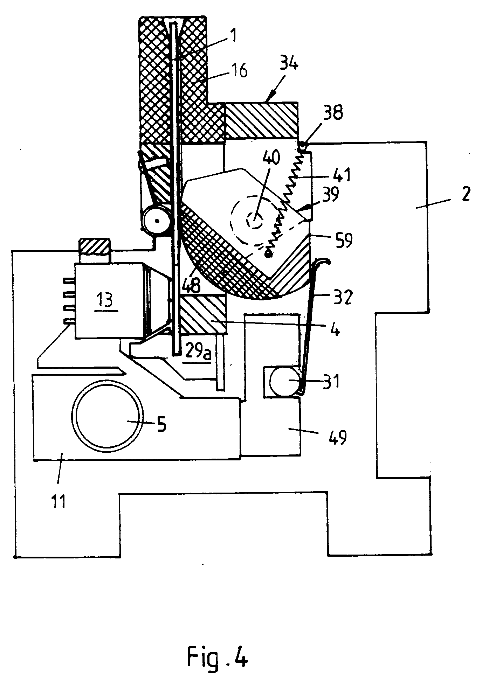

Die Funktionsweise dieser Wippe 39 geht aus den Figuren 3 und 4 besser hervor. In Ausgangslage ist die Wippe 39 in der in Figur 3 gezeigten Stellung. Dabei befindet sich der Querstift 42, welcher über die Feder 41 mit dem Querbolzen 43 in Verbindung steht, zwischen dem Schlitz 18 und dem Wellenstift 40. D.h., daß die Feder 41 auf die Wippe 39 einen Zug ausübt, welcher die Wippe 39 in Drehrichtung z drängt. Allerdings ist dabei die Wippe 39 so gelagert, daß sie zwar eine Ausnehmung 45 in dem Traversenstreifen 4 durchgreift und somit in den Bereich des Schlitzes 18 eingreift, jedoch dort auf die Druckrolle 25 bzw. auf die gegenüberliegende Leiste 19 auftrifft, so daß ihre Drehbewegung in Richtung z gebremst ist. Gleichzeitig wird sie auch durch den Hebel 32 gehalten, welcher mit einem gekrümmten Haken 46 in einen Freiraum 47 in der Wippe 39 eingreift, in welcher im übrigen auch die Feder 41 bewegbar gelagert ist. In diesem Sinn ist auch verständlich, daß die Wellenstifte 40 nicht als durchgehende Drehwelle die Wippe 39 durchsetzen, sondern den Freiraum 47 frei lassen.

Zur Karte 1 bzw. zum Schlitz 18 hin ist im übrigen eine Oberfläche der Wippe 39 mit einem reibschlüssigen Scheibensegmentstück 48 belegt, welches bei Betätigung der Wippe 39 die Kartenoberfläche abrollt. Durch die Wippe 39 wird das Einziehen und Ausstoßen der Karte 1 bewirkt, wie dies weiter unten beschrieben ist. Ein Teil der Tätigkeit der Wippe 39 wird dabei von dem Hebel 32 bewirkt, welcher von der Führungsschiene 31 in Schwenkbewegung versetzt werden kann, wie dies bei einem Vergleich der Figuren 3 und 4 erkennbar ist.

An dieser Schiene 31, welche drehbar gelagert ist, gleitet ein Schlitten 49, wobei die Schiene den Schlitten 49 durchsetzt. Der Schlitten 49 ist im übrigen mit dem Schlitten 11 verbunden, auf dem der Schreib-/Lesekopf 13 aufsitzt. Dies gewährleistet, daß der Schlitten 49 nur in Abhängigkeit der Bewegung des Schlittens 11 entlang der Führungsschiene 31 gleiten kann. Ein Oberteil 50 des Schlittens 49 besitzt einen Anschlagbolzen 51, welcher einen Winkelhebel 52 betätigen kann. Beim Auftreffen des Anschlagbolzens 51 auf einen Schenkel 53 des Winkelhebels 52 dreht dieser um einen Drehbolzen 54 gegen die Kraft einer Feder 55. Der Drehbolzen 54 ist in dem Traversenstreifen 4 ortsfest gelagert. Die Feder 55 stützt sich einends gegen den Schenkel 53 und andernends gegen den Halterahmen 2 ab, während sie den Drehbolzen 54 mehrfach umschlingt.

Am anderen Schenkel 56 des Winkelhebels 52 ist ein Hebelgestänge 57 gelenkig befestigt. Dieses Hebelgestänge 57 verbindet diesen Schenkel 56 mit einen Ring 58, welcher der Führungsschiene 31 drehsicher aufgesetzt ist. Eine Drehung des Winkelhebels beim Auftreffen des Anschlagbolzens 51 auf dem Schenkel 53 bewirkt, daß die Führungsschiene 31 in Drehrichtung zl (siehe Figur 3) versetzt wird, so daß ein Verschwenken des Hebels 32 gegen die Wippe 39 stattfindet.

Bei einem weiteren Auführungsbeispiel einer erfindungsgemässen Vorrichtung zum Lesen und/oder Schreiben von Markierungen auf Karten ist anstelle der Wellenstifte 40 eine Drehachse 60 vorgesehen, welche mit der Wippe 39 drehfest verbunden ist. Mittels dieser Drehachse 60 kann die Wippe 39 in oder entgegen der Drehrichtung z gedreht werden. Die Drehung wird ebenfalls mittels des Schlittens 11 bzw. 49 bewirkt, dessen Oberteil 50 an einer Führungsstange 61 geführt ist. Von dem Oberteil 50 ragt nach innen ein Bolzen 62, der bei einer Bewegung des Schlittens 11 entlang der Führungsstange 61 bzw. der Spindel 5 auf eine Stirnfläche 63 eines Kegelradsegmentes 64 auftrifft. Dieses Kegelradsegment 64 dreht um einen Drehpunkt 65 an dem Traversenstreifen 4 in Richtung des Doppelpfeiles 66, sobald der Bolzen 62 der Stirnfläche 63 anliegt.

Die Bewegung des Kegelradsegmentes 64 um den Drehpunkt 65 wird über eine Segmentzahnung 67 auf ein weiteres Kegelrad 68 übertragen, welches drehfest mit der Drehachse 60 verbunden ist. Auf diese Weise wird die Drehachse 60 beim Auftreffen des Bolzens 62 auf die Stirnfläche 63 in Drehrichtung z und damit auch die Wippe 39 in Drehrichtung z gedreht, so daß es zu einem Ausstoßen der Karte 1 kommt.

Die Funktionsweise der vorliegenden Erfindung ist die folgende:

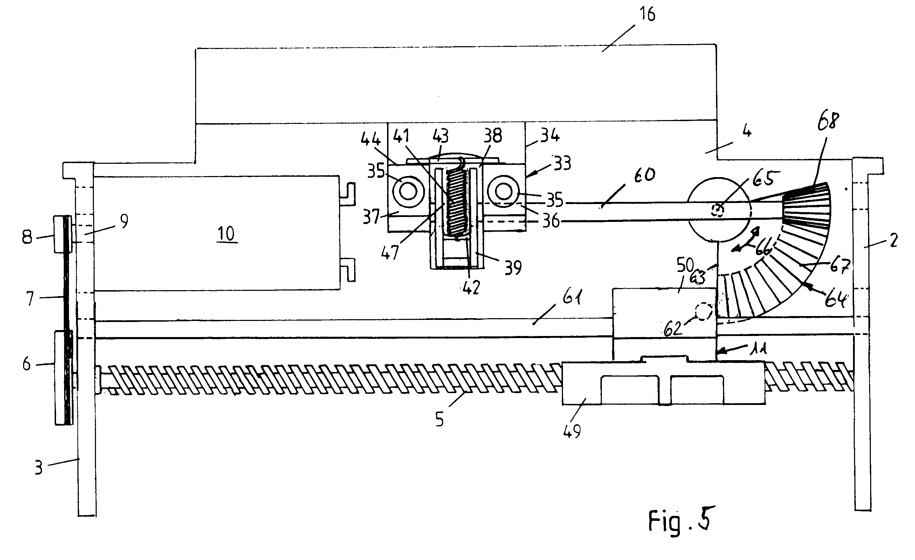

Vor dem Einführen einer Karte 1 in den Längsschlitz 17 bzw. Schlitz 18 befindet sich die Wippe 39 etwa in der in Figur 3 gezeigten Stellung, während sich der Schreib-/Lesekopf 13 nahe dem Halterahmen 3 befindet. Das bedeutet, daß auch der Schlitten 49 weit entfernt von dem Winkelhebel 52 bzw. der Stirnfläche 63 des Kegelradsegmentes 64 angeordnet ist. Der Winkelhebel 52 befindet sich in seiner in Figur 2 gezeigten Ausgangslage, wobei der Hebel 32 keine Berührung mit der Wippe 39 besitzt, sondern etwa in der in Figur 4 gezeigten Lage sich befindet. Bei dem Ausführungsbeispiel nach Figur 5 hat in dieser Lage das Kegelrad 68 einen Teil des Kegelradsegmentes 64 abgerollt.

Wird nun eine Karte 1 in den Längsschlitz 17 bzw. Schlitz 18 eingeführt, so trifft sie auf das reibschlüssige Scheibensegmentstück 48 der Wippe 39 sowie die Druckrolle 25. Bei einem weiteren Druck auf die Karte 1 wird sie zwischen Druckrolle 25 und Scheibensegmentstück 48 geschoben, wobei sie die Wippe 39 bereits ein Stück entgegen der Drehrichtung z mitnimmt, da das reibschlüssige Scheibensegmentstück 48 nicht auf der Karte gleitet. Aus diesem Grund ist dieses Scheibensegmentstück 48 beispielsweise gummiartig ausgebildet.

Bei Drehung des Scheibensegmentstückes 48 um die Wellenstifte 40 bzw. due Drehachse 60 entgegen der Drehrichtung z wird die Feder 41 gespannt, bis ein nicht näher gezeigter Scheitelpunkt überwunden ist, der auf einer verlängerten Verbindungslinie zwischen dem Wellenstift bzw. der Drehachse und dem Querbolzen 43 liegt.

Nunmehr braucht auf die Karte 1 kein weiterer Druck ausgeübt zu werden, da sich jetzt die Feder 41 wieder zusammenzieht und dabei die Wippe 39 weiter entgegen der Drehrichtung z automatisch dreht. Hierdurch erfolgt unabhängig vom Bediener ein Einziehen der Karte 1 in den Schlitz 18.

5

Dieses automatische Einziehen der Karte 1 geschieht solange, bis die Karte 1 auf die Endanschläge 29 auftrifft, wobei dann auch keine weitere Drehung der Wippe 39 erfolgt. In dieser Stellung ist entweder ein Anschlag für die Wippe 39 vorhanden, oder aber die Zugkraft der Feder 41 aufgebraucht, so daß sie eine Reibung des Scheibensegmentstücks 48 an der Oberfläche der Karte 1 nicht überwinden kann.

Die Endanschläge 29a melden der Elektronik den Einzug der Karte 1. Nunmehr wird der Schreib-/Lesekopf 13 über die Spindel 5 in Linearbewegung versetzt, so daß er den Informationsbereich 15 der Karte 1 ablaufen kann.

Erst gegen Ende des Schreib-/Lesevorganges trifft der Anschlagbolzen 51 auf den Winkelhebel 52, wodurch dieser in Drehbewegung um den Drehbolzen 54 versetzt wird. Dabei nimmt der Schenkel 56 dieses Winkelhebels 52 über das Hebelgestänge 57 und den Ring 58 die Führungsschiene 31 mit, so daß diese in Drehbewegung zl versetzt wird. Diese Drehbewegung erfolgt entgegen dem Uhrzeigersinn und bewirkt, daß der Hebel 32 auf die Wippe 39 auftrifft.

Bei einer weiteren Drehbewegung der Führungsschiene 31 in Drehrichtung zl wird nun die Wippe 39 in Drehrichtung z versetzt, wobei die Karte 1 zwischen dem Scheibensegmentstück 48 und der Druckrolle 25 mitgenommen und aus dem Längsschlitz 17 ausgestoßen wird. Dies geschieht bis zu dem oben erwähnten Scheitelpunkt der Verbindungslinie zwischen Wellenstift 40 und Querbolzen 43 entgegen dem Zug der Feder 41. Jetzt greift der Hebel 32, wie oben erwähnt, in den Freiraum 47 der Wippe 39 ein und drückt so auf eine Steuerkante 59, daß sich die Wippe 39 nicht vom Hebel 32 lösen kann.

Erst wenn der Schreib-/Lesevorgang beendet ist und der Schlitten 11 bzw. 49 wieder in seine Ausgangsstellung zurückfährt und damit der Hebel 32 von der Wippe 39 gelöst wird, kann die Wippe 39 beim Herausziehen der Karte 1 in ihre Ausgangslage zurückschnappen. Dies geschieht aber erst in dem Augenblick, wenn der Kartenbesitzer die Karte aus dem Längsschlitz 17 zieht.

Dasselbe wird durch den Bolzen 62 bei dem Ausführungsbeispiel nach Figur 5 bewirkt, der auf die Stirnfläche 63 des Kegelradsegmentes 64 auftrifft, dieses dreht, wobei die Drehung über die Segmentzahnung 67 auf das Kugelrad 68 und auf die Drehachse 60 übertragen wird.

| | P O S I T I O N S Z A H L E N L I S T E | | | | |
|---|---|---|---|---|---|
| 1 | Karte | 34 | Gehäuserahmen | 67 | Segmentzahnung |
| 2 | Halterahmen | 35 | Schraube | 68 | Kegelrad |
| 3 | Halterahmen | 36 | Seitenschenkel | | |
| 4 | Traversenstreifen | 37 | Seitenschenkel | | |
| 5 | Spindel | 38 | Ausnehmung | | |
| 6 | Antriebsrad | 39 | Wippe | | |
| 7 | Antriebsriemen | 40 | Wellenstift | | |
| 8 | Rad | 41 | Feder | | |
| 9 | Antriebswelle | 42 | Querstift | | |
| 10 | Antrieb | 43 | Querbolzen | | |
| 11 | Schlitten | 44 | schulterf. Absatz | | |
| 12 | Tragrahmen | 45 | Ausnehmung | | |
| 13 | Schreib-/Lesekopf | 46 | Hakenende | | |
| 14 | Drehwelle | 47 | Freiraum | | |
| 15 | Info-Bereich | 48 | Scheibensegmentstück | | |
| 16 | Kartenführung | 49 | Schlitten | | |
| 17 | Längsschlitz | 50 | Oberteil | | |
| 18 | Schlitz | 51 | Anschlagbolzen | R | Vorrichtung |
| 19 | Leiste | 52 | Winkelhebel | | |
| 20 | Ausnehmung | 53 | Schenkel | | |
| 21 | Rille | 54 | Drehbolzen | | |
| 22 | Blattfeder | 55 | Feder | | |
| 23 | Schraube | 56 | Schenkel | | |
| 24 | freie Kante | 57 | Hebelgestänge | | |
| 25 | Druckrolle | 58 | Ring | x | Linearbewegung |
| 26 | Welle | 59 | Steuerkante | z1 | Drehrichtung |
| 27 | Fenster | 60 | Drehachse | z | Drehrichtung |
| 28 | unterer Rand | 61 | Führungsstange | | |
| 29 | Endanschlag | 62 | Bolzen | | |
| 30 | Sensor | 63 | Stirnfläche | | |
| 31 | Führungsschiene | 64 | Kegelradsegment | | |
| 32 | Hebel | 65 | Drehpunkt | | |
| 33 | Einrichtung zum Einziehen | 66 | Doppelpfeil | | |

**Patentansprüche**

1. Vorrichtung zum Schreiben und/oder Lesen von Markierungen, Informationen od. dgl. auf Karten, insbesondere Magnet- und Chipkarten, mit einem Schlitz zum Einführen der Karte, einem Schreib-/Lesekopf zum Erfassen und/oder Übertragen von Informationen von bzw. auf die Karte sowie einer Einrichtung zum Einziehen und Ausstoßen der Karte,

   dadurch gekennzeichnet,

daß in Einschubrichtung der Karte (1) in den Bereich des Schlitzes (18) eine zumindest teilkreisförmige Wippe (39) eingreift, welche um eine Welle, Wellenstifte (40), Drehachse (60) od. dgl. dreht und mit der exzentrisch zu der Welle bzw. den Wellenstiften (40) ein Kraftspeicher (41) verbunden ist, welcher abhängig von der Drehrichtung (z) der Wippe (39) nach Überschreiten eines Scheitelpunktes die Drehbewegung der Wippe (39) in die eine Drehrichtung (z) oder gegen diese Drehrichtung (z) unterstützt.

2. Vorrichtung nach Anspruch 1, dadurch gekennzeichnet, daß die Wippe (39) zur Karte (1) hin mit einem reibschlüssigen Scheibensegmentstück (48) belegt ist.

3. Vorrichtung nach Anspruch 1 oder 2, dadurch gekennzeichnet, daß der Kraftspeicher eine Feder (41) ist, welche einerseits an der Wippe (39) neben den Wellenstiften (40) bzw. der Drehachse (60) und andererseits an einem die Wippe (39) zumindest teilweise umfangenden Gehäuserahmen (34) festgelegt ist.

4. Vorrichtung nach Anspruch 3, dadurch gekennzeichnet, daß der Gehäuserahmen (34) U-förmig ausgebildet ist, wobei zwei Seitenschenkel (36,37) die Wippe (39) zwischen sich in einer Ausnehmung (38) aufnehmen.

5. Vorrichtung nach Anspruch 4, dadurch gekennzeichnet, daß die Wellenstifte (40) von den Seitenschenkeln (36,37) in die Wippe (39) seitlich eingreifen, während der Kraftspeicher bzw. die Feder (41) in einem Freiraum (47) in der Wippe (39) an einem Querstift (42) od. dgl. befestigt sind.

6. Vorrichtung nach Anspruch 4 oder 5, dadurch gekennzeichnet, daß an dem Gehäuserahmen (34) ein schulterförmiger Absatz (44) ausgebildet ist, auf dem ein Querbolzen (43) aufliegt, der die Feder (41) andernends des Querstiftes (42) hält.

7. Vorrichtung nach wenigstens einem der Ansprüche 1 bis 6, dadurch gekennzeichnet, daß der Wippe (39) im Bereich des Schlitzes (18) eine Druckrolle (25) zugeordnet ist.

8. Vorrichtung nach Anspruch 7, dadurch gekennzeichnet, daß die Druckrolle (25) an einer Welle (26) drehbar lagert, wobei die Welle (26) von einer Blattfeder (22) in einer Rille (21) gehalten ist.

9. Vorrichtung nach wenigstens einem der Ansprüche 1 bis 8, dadurch gekennzeichnet, daß der Wippe (39) ein Hebel (32) zugeordnet ist, welcher die Wippe (39) in Drehrichtung (z) bewegt.

10. Vorrichtung nach Anspruch 9, dadurch gekennzeichnet, daß der Hebel (32) einends an einer Führungsschiene (31) befestigt ist und andernends sich gegen die Wippe (39) lehnt.

11. Vorrichtung nach Anspruch 10, dadurch gekennzeichnet, daß bei einer Drehung der Führungsschiene (31) der Hebel (32) endwärtig die Wippe (39) dreht und nach einer bestimmten Drehung in den Freiraum (47) eingleitet und dort auf eine Steuerkante (59) drückt.

12. Vorrichtung nach Anspruch 11, dadurch gekennzeichnet, daß die Drehung der Führungsschiene (31) mittels eines Schlittens (49) erfolgt, welcher entlang der Führungsschiene (31) gleitet und mit der Bewegung des Schreib-/Lesekopfes (13) gekoppelt ist.

13. Vorrichtung nach Anspruch 12, dadurch gekennzeichnet, daß der Schlitten (49) mit einem Anschlag (51) auf einen Winkelhebel (52) trifft, welcher über ein Hebelgestänge (57) mit der Führungsschiene (31) verbunden ist.

14. Vorrichtung nach Anspruch 13, dadurch gekennzeichnet, daß der Winkelhebel (52) an einem Drehbolzen (54) ortsfest lagert und sein einer Schenkel (53), der von dem Anschlag (51) angegriffen wird, unter dem Gegendruck einer Feder (55) steht.

15. Vorrichtung nach Anspruch 14, dadurch gekennzeichnet, daß der andere Schenkel (56) des Winkelhebels (52) über das Hebelgestänge (57) mit einem Ring (58) in Verbindung steht, welcher drehfest auf

8

der Führungsschiene (31) aufsitzt.

16. Vorrichtung nach wenigstens einem der Ansprüche 1 bis 8, dadurch gekennzeichnet, daß die Wippe (39) eine Drehachse (60) aufweist, welche mit Getriebeelementen (64, 68) zum Drehen der Wippe (39) in Drehrichtung (z) gekoppelt ist.

17. Vorrichtung nach Anspruch 16, dadurch gekennzeichnet, daß die Drehung der Drehachse (60) über die Getriebeelemente (64, 68) mittels eines Schlittens (11, 49) erfolgt, welcher entlang einer Führungsstange (61) gleitet und mit der Bewegung des Schreib-/Lesekopfes (13) gekoppelt ist.

18. Vorrichtung nach Anspruch 16 oder 17, dadurch gekennzeichnet, daß der Schlitten (11, 49) mit einer Stirnfläche (63) eines Kegelradsegmentes (64) zusammenwirkt, dessen Segmentzahnung (67) mit einem mit der Drehachse (60) verbundenen Kegelrad (68) kämmt.

Fig.1

Fig. 2

Fig.3

Fig.4

Fig. 5

| DOCUMENTS CONSIDERED TO BE RELEVANT | | | EP 91121521.8 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | EP - A - 0 181 461 (NIXDORF) * Ansprüche 1-20; Fig. 1,2 * | 1 | G 06 K 13/05 G 06 K 13/06 G 06 K 13/08 |
| A | EP - A - 0 291 473 (SEAC ENGINEERING) * Spalte 2; Fig. 1-3 * | 1 | |
| A | CH - A - 538 985 (FRAMA AG) * Spalten 2,3; Fig. 1 * | 1 | |

TECHNICAL FIELDS
SEARCHED (Int. Cl.5)

G 06 K

The present search report has been drawn up for all claims

| Place of search | Date of completion of the search | Examiner |
|---|---|---|
| WIEN | 03-04-1992 | MIHATSEK |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)